# FASCICULE DE BREVET EUROPEEN

(11) **EP 2 640 644 B1**
(45) Date de publication et mention de la délivrance du brevet: **06.08.2014**
(21) Numéro de dépôt: 11802470.2
(22) Date de dépôt: 04.11.2011
(51) Int. Cl.: B65B 11/10, B65B 59/00, B65B 59/04, B65G 23/44

(54) **MODULE DE NAPPAGE POUR INSTALLATION DE FARDELAGE**
WICKELMODUL FÜR EINE BÜNDELUNGSANLAGE
WRAPPING MODULE FOR A BUNDLING INSTALLATION

(30) Priorité: 19.11.2010 FR 1059524
(43) Date de publication de la demande: 25.09.2013
(73) Titulaire: Sidel Participations, 76930 Octeville sur Mer (FR)
(72) Inventeur: VASSE, Michael, F-76930 Octeville-sur-mer (FR); DANIERE, Lionel, F-76930 Octeville-sur-mer (FR); CHOPLIN, Grégory, F-76930 Octeville-sur-mer (FR)
(74) Mandataire: Cabinet Plasseraud
(86) Numéro de dépôt international: PCT/FR2011/052576
(87) Numéro de publication internationale: WO 2012/066213

(56) Documents cités:
- EP-A1- 0 403 079
- EP-A1- 0 629 551
- EP-A1- 1 013 552
- EP-A1- 1 493 692
- EP-A1- 2 202 186
- GB-A- 2 041 315

## Description

La présente invention concerne un perfectionnement aux installations de conditionnement de produits sous film plastique, communément appelées fardeleuses, et, plus particulièrement, un perfectionnement au poste de nappage où un film plastique est mis autour de lots de produits successifs.

Ce type d'installation, comme décrit notamment dans le document EP 0 403 079, s'étend entre une machine de préparation de produits, des bouteilles par exemple, et un tunnel de thermo-rétraction du film plastique qui entoure chaque lot de produits.

Cette machine comporte des aménagements qui permettent, avant de réaliser l'opération proprement dite de fardelage, de former des lots et ce sont ces lots qui sont introduits, de façon séquentielle à une cadence donnée, au niveau d'un poste que l'on appelle poste de nappage. Ce poste de nappage reçoit le lot de produits et, en même temps, il reçoit une feuille en matériau plastique thermorétractable, et c'est au niveau de ce poste de nappage que s'effectue l'enveloppement du lot avec ladite feuille plastique.

Le poste de nappage comprend une table de nappage, qui prend en charge le lot de produits, et un cycleur, du type à barrettes, qui prend en charge le film plastique pour le développer autour du lot au fur et à mesure de la progression du lot sur ladite table de nappage.

La table de nappage fait donc office de convoyeur ; elle comporte un tapis sans fin, qui avance à une vitesse qui est synchronisée avec la vitesse des barrettes du cycleur pour réaliser cette opération d'enveloppement du lot par le film plastique.

Cette synchronisation indispensable entre le tapis de convoyage et le cycleur impose certaines contraintes pour le tapis au niveau de son entraînement, qui doit s'effectuer de manière très précise, et, pour obtenir ce résultat, le tapis est soumis à des tensions relativement importantes. Ces contraintes ont pour effet de mettre ce tapis au même rang que les pièces d'usure et, en particulier, des pièces qui, de préférence, font l'objet d'un changement systématique, sans attendre une rupture qui pourrait être lourde de conséquences au cours du fonctionnement normal de l'installation.

Or, ce tapis, installé sur une table de nappage, est difficilement accessible ; il est enveloppé par le cycleur et cette imbrication implique une intervention lourde, avec plusieurs opérateurs et beaucoup de temps, ce qui bien entendu est préjudiciable pour l'utilisation de la machine.

La présente invention propose un nouvel aménagement de ce poste de nappage, avec un aménagement original de la table de nappage elle-même, de telle façon que cette intervention qui consiste à changer le tapis puisse se faire dans des conditions acceptables, dans un temps relativement court et sans nécessiter l'intervention de plusieurs opérateurs.

Le module de nappage selon l'invention comprend, réunis dans un berceau dont la section transversale est en forme de U, - une table de nappage dont les extrémités du châssis comportent chacune un ou des rouleaux de guidage d'un tapis sans fin et, - un cycleur ayant des barrettes montées sur des chaînes sans fin pour circuler tout autour de ladite table de nappage, caractérisé en ce que le châssis de ladite table de nappage est constitué de longerons, disposés latéralement, qui se prolongent par des extensions en forme de bras rétractables dont les extrémités portent lesdits rouleaux, et ledit châssis est solidaire, par des moyens facilement démontables, de l'une au moins des parois latérales dudit berceau, laquelle paroi est en forme de cadre ajouré avec une fenêtre ouverte sur ladite table de nappage, ladite fenêtre ayant une dimension, dans le sens longitudinal, qui est inférieure à la longueur totale de la table, mais cette dimension est supérieure à la longueur de ladite table après rétraction de ses bras d'extrémité, ce qui va permettre l'extraction dudit tapis sans fin et/ou la mise en place d'un autre tapis.

Toujours selon l'invention, le brin supérieur actif du tapis de convoyage glisse sur une sole réalisée en plusieurs parties, laquelle sole comprend - une plaque centrale fixe portée par les longerons et, - des plaques complémentaires qui sont portées par les bras rétractables qui supportent les rouleaux d'extrémités servant au guidage dudit tapis.

Selon une autre disposition de l'invention, les bras rétractables qui supportent les rouleaux d'extrémités servant au guidage du tapis, sont mobiles verticalement pour permettre un escamotage de leur plaque complémentaire de guidage du tapis, et permettre le positionnement de ces plaques complémentaires sous la plaque centrale fixe.

Toujours selon l'invention, les longerons du châssis de la table de nappage comportent des lumières longitudinales, qui font office de glissières et qui permettent aux moyens de fixation des bras rétractables d'extrémités d'être guidés lors de leur mouvement de rétraction, qui permet de positionner leur plaque complémentaire sous la plaque centrale fixe.

Selon une autre disposition de l'invention, le châssis de la table de nappage est solidaire du cadre ajouré au moyen de pattes de fixation, en forme d'équerres, qui sont amovibles et qui, après leur retrait, laissent ladite table en porte-à-faux, portée par des moyens de fixation qui sont interposés entre son châssis et l'autre paroi du berceau.

Selon une autre disposition de l'invention, le brin inférieur du tapis sans fin s'enroule sur un rouleau moteur au moyen de deux rouleaux complémentaires disposés au-dessus et de part et d'autre dudit rouleau moteur pour réaliser un enroulement dudit tapis sur une moitié de la surface dudit rouleau moteur, lesquels rouleaux complémentaires sont solidaires du châssis de la table par l'intermédiaire de moyens d'assemblage à démontage rapide, du genre simple vis, qui sont en prise directe avec un arbre respectif sur lequel est monté chaque rouleau complémentaire.

Selon une autre disposition de l'invention, les plaques latérales portées par les bras d'extrémité s'aboutent avec la plaque centrale fixe et, d'un côté, au moins un dispositif de réglage fin est interposé entre lesdits bras et les longerons du châssis, lequel dispositif de réglage permet de décaler la plaque complémentaire correspondante pour régler son jeu par rapport aux barrettes du cycleur et/ou par rapport à la sole ou à un tapis suivant adjacent.

L'invention concerne également la table de convoyage elle-même, utilisée dans une installation de fardelage pour l'opération de nappage. Par GB 2 041 315 et EP 1 493 692, on connaît des tables de convoyage, pouvant être utilisées dans une installation de fardelage pour l'opération de nappage, et comportant chacune un châssis qui est muni, à l'une au moins de ses extrémités longitudinales, de bras supports pour un ou des rouleaux de guidage d'un tapis sans fin de convoyage, lesquels bras supports sont mobiles, escamotables longitudinalement, de façon à réduire, dans des proportions notables, l'encombrement longitudinal de ladite table, lequel tapis comporte un brin supérieur actif qui glisse sur une sole réalisée en plusieurs parties, dont une partie comprenant une plaque centrale fixe portée par des longerons et une partie comprenant au moins une plaque de guidage complémentaire qui est portée par lesdits bras rétractables qui supportent ledit ou lesdits rouleaux d'extrémité servant au guidage du tapis, ce qui permet de régler la tension du tapis et/ou de faciliter le démontage et le remplacement du tapis.

La table de convoyage de l'invention, du type connu présenté ci-dessus, se caractérise en ce que lesdits bras rétractables sont mobiles verticalement pour permettre un escamotage de leur plaque de guidage complémentaire dudit tapis, et permettre le positionnement de leur plaque de guidage complémentaire sous la plaque centrale fixe.

Avantageusement, les longerons du châssis de la table comportent des lumières longitudinales qui font office de glissières et qui permettent aux moyens de fixation des bras rétractables d'être guidés lors de leur mouvement de rétraction qui permet de positionner leur plaque de guidage complémentaire sous la plaque centrale fixe.

L'encombrement longitudinal de la table de convoyage peut ainsi être réduit d'une valeur de l'ordre de 10 à 25 % par exemple.

Pour pouvoir être exécutée, l'invention est exposée de façon suffisamment claire et complète dans la description suivante qui, en plus, est accompagnée de dessins dans lesquels ;
- la figure 1 représente, de façon schématique, le module de nappage selon l'invention, vu du côté par lequel s'effectue le retrait du tapis sans fin de convoyage ;
- la figure 2 est une demi-vue schématique en coupe selon 2-2 de la figure 1 montrant, notamment, le berceau qui regroupe les éléments actifs de ce module de nappage ;
- la figure 3 représente le module, vu de l'autre côté par rapport à la figure 1, et en particulier du côté où se situe les moyens d'entraînement du tapis de nappage ;
- la figure 4 montre en perspective schématique le détail d'un élément de fixation rapide du châssis de la table de nappage sur le cadre ajouré du berceau ;
- les figures 5 et 6 montrent les différentes opérations mises en oeuvre pour parvenir à l'extraction du tapis sans fin de nappage et/ou à son remplacement.

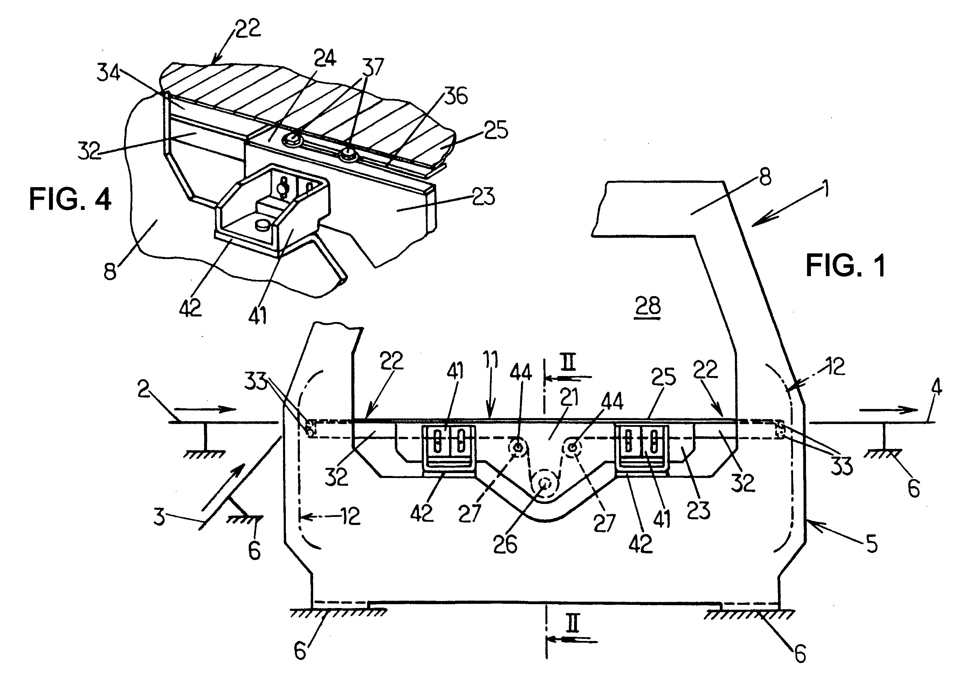

La figure 1 montre le module 1 de nappage qui est interposé entre un convoyeur 2 amont d'amenée des lots de produits, sous lequel on remarque la table 3 d'injection du film plastique, et un convoyeur 4 aval qui emmène le lot de produits, enveloppé de son film plastique, vers le tunnel de thermorétraction, non représenté.

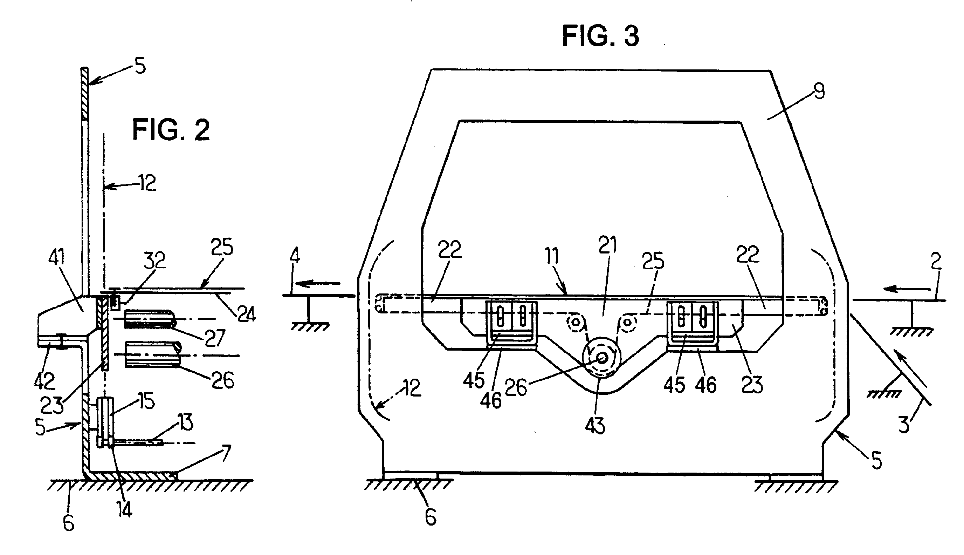

Ce module 1 de nappage comprend un berceau 5 qui apparaît, en partie, sur la demi-coupe transversale représentée figure 2. Ce berceau 5 repose sur le bâti 6 général de l'installation de fardelage et il se présente sous la forme d'un U dont le fond 7 repose sur ledit bâti avec deux parois latérales qui sont en forme de cadres, lesquels cadres pouvant être similaires ou différents comme expliqué ci-après ; ils sont repérés différemment : l'un, le cadre 8, est visible directement figure 1 ; l'autre, le cadre 9, est visible directement figure 3.

Le berceau 5 est aménagé pour accueillir, entre ses deux cadres 8 et 9, la table 11 de nappage et le cycleur 12 qui est schématisé, figures 1 et 3. Ce cycleur 12 est simplement représenté par des traits mixtes fins qui illustrent en fait une portion du chemin des barrettes de ce cycleur 12, lesquelles barrettes 13 apparaissent figure 2.

Toujours figure 2, le cycleur 12 comprend des chaînes 14 sans fin, qui portent les barrettes 13, lesquelles chaînes 14 sont disposées latéralement et leur chemin est façonné notamment par des guides 15 qui sont situés sur la face interne des cadres 8 et 9. Dans leur mouvement, les barrettes 13 enveloppent la table 11 de nappage. Pour permettre le passage des barrettes 13 entre les extrémités de cette table 11 de nappage et les extrémités, en amont, du convoyeur 2 d'amenée des lots de produits et, en aval, l'entrée du convoyeur 4, un jeu approprié est aménagé entre chaque extrémité de ladite table 11 et, respectivement, l'extrémité aval dudit convoyeur 2 d'amenée et l'extrémité amont du convoyeur 4 situé en aval.

La longueur totale de la table 11 de nappage est déterminée par la distance qui existe entre le passage amont des barrettes 13 du cycleur 12, à l'entrée du module 1 de nappage, et le passage aval de ces mêmes barrettes, à la sortie dudit module 1 de nappage, ladite distance étant mesurée au niveau de la surface de circulation des lots de produits.

La table 11 de nappage comprend un châssis 21 qui constitue sa partie centrale et deux extensions 22 latérales qui s'étendent jusqu'au niveau du chemin des barrettes 13.

Le châssis 21 comprend, latéralement, des longerons 23, lesquels longerons sont réunis par une plaque 24, visible figures 2 et 4, laquelle plaque 24 fait office de sole pour le tapis 25 sans fin de convoyage qui s'étend entre l'entrée et la sortie du module 1 de nappage.

Ces longerons 23 comportent également des moyens pour accueillir le rouleau 26 moteur qui entraîne le tapis 25 et pour accueillir les deux rouleaux 27 complémentaires, lesquels rouleaux 27 sont situés au-dessus du niveau de l'axe du rouleau 26 moteur et de part et d'autre du rouleau 26 moteur ; ils permettent de réaliser un enroulement du tapis 25 sur une bonne moitié du rouleau 26 moteur.

On remarque figure 1 que le châssis 21, avec ses longerons 23, s'inscrit dans la fenêtre 28 qui est aménagée dans la paroi latérale du berceau 5 qui forme le cadre 8. Ce sont les extensions 22, de part et d'autre de la partie centrale du châssis 21, qui font que la table 11 de nappage a une dimension, en longueur, qui est supérieure à la dimension longitudinale de la fenêtre 28.

Ces extensions 22 sont constituées chacune de bras 32 disposés latéralement, lesquels bras 32 constituent une sorte de prolongement des longerons 23 et ils portent, à leur extrémité, le ou les rouleaux 33 qui servent de guide d'enroulement pour le tapis 25 de nappage.

Les bras 32 sont reliés entre eux par une plaque 34 qui fait également office de sole pour le tapis 25. Cette plaque 34, visible figure 4, s'aboute avec la plaque 24 centrale fixe pour réaliser une continuité au niveau du guidage du tapis 25 de nappage.

La plaque 24 centrale fixe comporte, latéralement, au niveau des longerons 23, des lumières 36 longitudinales qui font office de guide pour les moyens de fixation des bras 32, lesquels moyens de fixation sont, par exemple, comme représentés figure 4, constitués d'un couple de vis 37 qui sont en prise avec l'extrémité de chaque bras 32 qui se situe sous la plaque 24 et contre le longeron 23 correspondant.

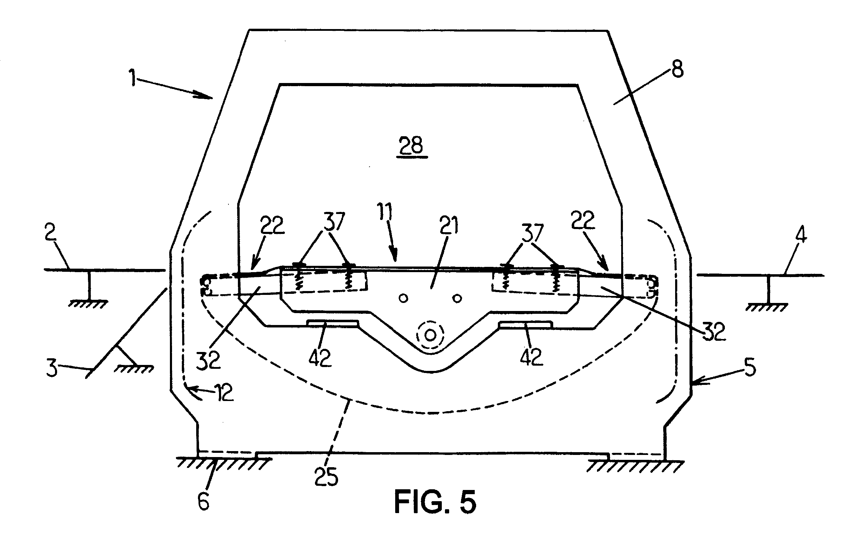

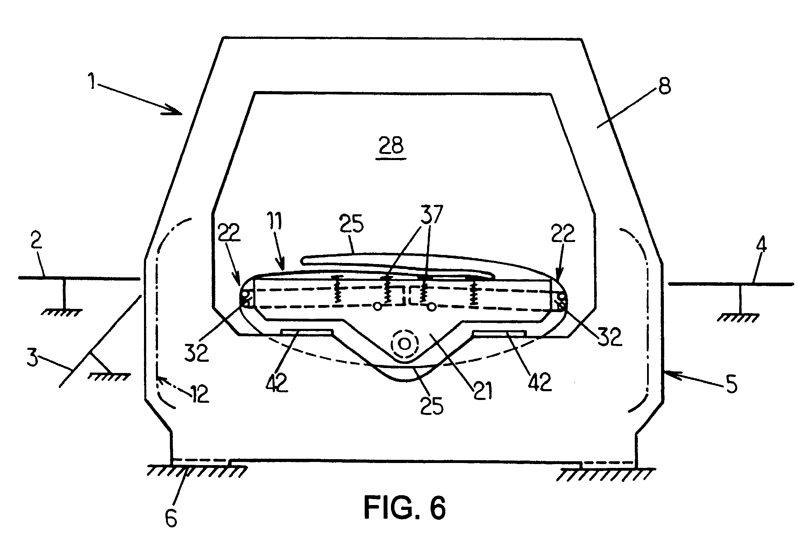

Pour pouvoir escamoter les extensions 22, il est nécessaire, compte tenu de la présence de la plaque 34 qui est portée par les bras 32, de déplacer verticalement cette extension 22 vers le bas afin de faire passer ladite plaque 34 sous la plaque 24 centrale, comme représenté figures 5 et 6.

La table de nappage 11 est portée et assemblée sur le berceau 1 par l'intermédiaire de son châssis 21 et, en particulier, par les longerons 23 de ce châssis 21. Les longerons 23 sont portés, du côté du cadre 8 et de la fenêtre 28, par des pièces 41 en forme de cornières qui reposent sur un sommier 42 aménagé sur ledit cadre 8, à la partie inférieure de la fenêtre 28.

La partie inférieure de la fenêtre 28 est aménagée, comme représenté figure 1, avec un contour qui correspond à celui des longerons 23 du châssis 21 avec un jeu important entre les deux.

La figure 1 montre la fenêtre 28 du cadre 8, c'est-à-dire le côté par lequel un opérateur peut intervenir pour accéder au tapis 25 et le sortir pour le remplacer, en cas de besoin.

La figure 3 montre l'autre côté du berceau 1 avec le cadre 9, lequel cadre 9 peut être, pour des raisons de simplicité, aménagé comme le cadre 8 avec le même genre de fenêtre. On remarque, sur cette figure 3, une roue 43 qui est solidaire du rouleau 26 moteur, laquelle roue 43 est entraînée par les mêmes moyens d'entraînement que ceux des chaînes 14 sur lesquelles sont montées les barrettes 13, pour obtenir un entraînement synchronisé entre les deux et réaliser l'opération d'enveloppement du lot de produits par le film plastique.

La présence du système d'entraînement du tapis 25, du côté du cadre 9, complique les opérations de changement de tapis et c'est pour cette raison que ces opérations s'effectuent de l'autre côté, là où un opérateur peut intervenir facilement sans avoir à réaliser de multiples opérations pour parvenir à libérer le tapis 25 qui, bien sûr, peut être découpé lorsqu'il s'agit d'un tapis usé mais qui, lorsqu'il est neuf, se présente sous la forme d'une enveloppe qu'il faut pouvoir enfiler sur la table 11 de nappage, sans l'abîmer.

Pour cette opération de changement du tapis 25, on procède, comme représenté figure 5, par une première opération qui consiste à ôter les moyens de fixation des rouleaux 27 complémentaires qui guident le tapis 25 sur son rouleau 26 moteur, lesquels moyens de fixation sont, par exemple, constitués de vis 44 qui fixent deux arbres sur chacun desquels est monté l'un respectivement desdits rouleaux 27. Ensuite, l'intervention consiste à desserrer les vis 37 qui fixent les bras 32 sur la plaque 24 centrale fixe, pour permettre le dégagement des extensions 22 vers le bas afin d'escamoter chacune des plaques 34 et pour les placer sous le niveau de ladite plaque 24 centrale fixe.

L'opération de changement consiste ensuite à ôter les équerres 41 qui supportent la table 11, laquelle table est alors portée en porte-à-faux par les équerres 45 qui sont situées de l'autre côté, sur le cadre 9 du berceau 5, lesquelles équerres 45 sont fixées sur les longerons 23 du châssis 21 et sur des sommiers 46 qui sont façonnés sur ledit cadre 9, à la partie inférieure de la fenêtre correspondante.

Pour pouvoir retirer le tapis 25, l'opérateur escamote les extensions 22 en les faisant glisser sous la plaque 24 centrale fixe, comme représenté figure 6. L'enlèvement des équerres 41 permet de dévoiler la zone de passage du tapis 25, lequel tapis 25 est extrait en façade par l'opérateur par un simple glissement transversal du tapis sur la table 11, et au-dessus des sommiers 42 et, d'une manière générale, au-dessus du contour inférieur de la fenêtre 28.

Après avoir remis un nouveau tapis 25, l'opérateur procède à l'opération inverse en repositionnant les équerres 41, les rouleaux 27 complémentaires et, enfin, en repositionnant les extensions latérales 22, avec aboutage des plaques 34 sur la plaque 24 centrale.

On notera que des moyens complémentaires peuvent être installés pour effectuer des réglages de positions comme, par exemple, un réglage entre les plaques 24 et 34. On peut installer, un système de réglage fin, non représenté, qui permet d'ajuster la position de l'extrémité des extensions 22 par rapport au chemin de passage des barrettes 13, lequel réglage permet aussi d'améliorer la position des extrémités du tapis 25 par rapport à la sole ou au tapis adjacent situé aussi bien en aval qu'en amont de ce module 1 de nappage.

## Revendications

1. Module de nappage comprenant, réunis dans un berceau (5) dont la section transversale est en forme de U, - une table (11) de nappage dont les extrémités du châssis (21) comportent chacune un ou des rouleaux (33) de guidage d'un tapis (25) sans fin et, - un cycleur (12) ayant des barrettes (13) montées sur des chaînes (14) sans fin pour circuler tout autour de ladite table (11) de nappage, **caractérisé en ce que** le châssis (21) de ladite table (11) de nappage est constitué de longerons (23), disposés latéralement, qui se prolongent par des extensions (22) en forme de bras (32) rétractables dont les extrémités portent lesdits rouleaux (33), et ledit châssis (21) est solidaire, par des moyens facilement démontables, de l'une au moins des parois latérales dudit berceau (5), laquelle paroi est en forme de cadre (8) ajouré avec une fenêtre (28) ouverte sur ladite table (11) de nappage, ladite fenêtre (28) ayant une dimension, dans le sens longitudinal, qui est inférieure à la longueur totale de ladite table (11), mais cette dimension est supérieure à la longueur de ladite table (11) après rétraction de ses bras (32) d'extrémité.

2. Module de nappage selon la revendication 1, **caractérisé en ce que** le brin supérieur actif du tapis (25) de convoyage glisse sur une sole réalisée en plusieurs parties, laquelle sole comprend - une plaque (24) centrale fixe portée par les longerons (23) et, - des plaques (34) complémentaires qui sont portées par les bras (32) rétractables qui supportent les rouleaux (33) d'extrémités servant au guidage dudit tapis (25).

3. Module de nappage selon la revendication 2, **caractérisé en ce que** les bras (32) rétractables qui supportent les rouleaux (33) d'extrémités servant au guidage du tapis (25), sont mobiles verticalement pour permettre un escamotage de leur plaque (34) complémentaire de guidage dudit tapis (25), et permettre le positionnement de ces plaques (34) complémentaires sous la plaque (24) centrale fixe.

4. Module de nappage selon la revendication 3, **caractérisé en ce que** les longerons (23) du châssis (21) de la table (11) de nappage comportent des lumières (36) longitudinales, qui font office de glissières et qui permettent aux moyens de fixation des bras (32) rétractables d'être guidés lors de leur mouvement de rétraction, qui permet de positionner leur plaque (34) complémentaire sous la plaque (24) centrale fixe.

5. Module de nappage selon l'une quelconque des revendications 1 à 4, **caractérisé en ce que** le châssis (21) de la table (11) de nappage est solidaire du cadre (8) ajouré au moyen de pattes de fixation, en forme d'équerres (41), qui sont amovibles et qui, après retrait, laissent ladite table (11) en porte-à-faux, portée par des moyens de fixation qui sont interposés entre son châssis (21) et l'autre paroi du berceau (5).

6. Module de nappage selon l'une quelconque des revendications 1 à 5, **caractérisé en ce que** le brin inférieur du tapis (25) sans fin s'enroule sur un rouleau (26) moteur au moyen de deux rouleaux (27) complémentaires qui sont disposés au-dessus et de part et d'autre dudit rouleau (26) moteur pour réaliser un enroulement dudit tapis (25) sur une moitié de la surface dudit rouleau (26) moteur, lesquels rouleaux (27) complémentaires sont solidaires du châssis (21) de la table (11) par l'intermédiaire de moyens d'assemblage à démontage rapide, du genre simple vis (44), qui sont en prise directe avec un arbre respectif sur lequel est monté chaque rouleau (27) complémentaire.

7. Module de nappage selon la revendication 2, **caractérisé en ce que** les plaques (34) complémentaires portées par les bras (32) d'extrémité s'aboutent avec la plaque (24) centrale fixe et, d'un côté, au moins un dispositif de réglage fin est interposé entre lesdits bras (32) et les longerons (23) du châssis (21), lequel dispositif de réglage permet de décaler la plaque (34) complémentaire correspondante pour régler son jeu par rapport aux barrettes (13) du cycleur (12) et/ou par rapport à la sole ou à un tapis adjacent.

8. Table de convoyage utilisée dans une installation de fardelage pour l'opération de nappage, par exemple, laquelle table comporte un châssis (21) qui est muni, à l'une au moins de ses extrémités longitudinales, de bras (32) supports pour un ou des rouleaux (33) de guidage d'un tapis (25) sans fin de convoyage, lesquels bras (32) supports sont mobiles, escamotables longitudinalement, lequel tapis (25) comporte un brin supérieur actif qui glisse sur une sole réalisée en plusieurs parties, dont une partie comprenant une plaque (24) centrale fixe portée par des longerons (23) et, - une partie comprenant au moins une plaque (34) de guidage complémentaire qui est portée par lesdits bras (32) rétractables qui supportent ledit ou lesdits rouleaux (33) d'extrémités servant au guidage du tapis (25), **caractérisée en ce que** lesdits bras (32) rétractables, sont mobiles verticalement pour permettre un escamotage de leur plaque (34) de guidage complémentaire dudit tapis (25), et permettre le positionnement de ladite plaque (34) complémentaire sous la plaque (24) centrale fixe.

9. Table de convoyage selon la revendication 8, **caractérisée en ce que** les longerons (23) du châssis (21) de la table (11) comportent des lumières (36) longitudinales qui font office de glissières et qui permettent aux moyens de fixation des bras (32) rétractables, d'être guidés lors de leur mouvement de rétraction qui permet de positionner leur plaque (34) de guidage complémentaire sous la plaque (24) centrale fixe.

## Patentansprüche

1. Wickelmodul, umfassend, in einem Träger (5) mit einem U-fiörmigen Querschnitt zusammengefasst, - einen Wickeltisch (11), dessen Enden des Rahmens (21) jeweils eine oder mehrere Führungsrollen (33) eines Endlosbands (25) aufweisen, und einen Cycler (12) mit Stegen (13), die an Endlosketten (14) befestigt sind, um den Wickeltisch (11) zu umlaufen, **dadurch gekennzeichnet, dass** der Rahmen (21) des Wickeltischs (11) aus seitlich angeordneten Längsträgern (23) ausgebildet ist, die sich durch Erweiterungen (22) in Form von einziehbaren Armen (32), deren Enden die Rollen (33) tragen, verlängern, und der Rahmen (21) durch einfach demontierbare Einrichtungen mit zumindest einer der Seitenwände des Trägers (5) fest verbunden ist, wobei die Wand die Form Rahmens (8) aufweist, der durch ein zum Wickeltisch (11) geöffneten Fenster (28) durchbrochen ist, wobei das Fenster (28) in der Längsrichtung eine Abmessung aufweist, die kleiner als die Gesamtlänge des Tischs (11) ist, wobei diese Abmessung jedoch größer als die Länge des Tischs (11) nach dem Einziehen seiner Endarme (32) ist.

2. Wickelmodul nach Anspruch 1, **dadurch gekennzeichnet, dass** das obere aktive Trum des Förderbands (25) auf einem aus mehreren Teilen ausgeführten Boden gleitet, wobei der Boden Folgendes umfasst: - eine feste mittlere Platte (24), die durch die Längsträger (23) getragen wird, und - zusätzliche Platten (34), die durch die einziehbaren Arme (32), welche die Endrollen (33) zur Führung des Bands (25) halten, getragen werden.

3. Wickclmodul nach Anspruch 2, **dadurch gekennzeichnet, dass** die einziehbaren Arme (32), welche die Endrollen (33) zur Führung des Bands (25) halten, vertikal bewegbar sind, um ein Einfahren ihrer zusätzlichen Führungsplatte (34) des Bands (25) zu ermöglichen und die Anordnung dieser zusätzlichen Platten (34) unter der festen mittleren Platte (24) zu ermöglichen.

4. Wickelmodul nach Anspruch 3, **dadurch gekennzeichnet, dass** die Längsträger (23) des Rahmens (21) des Wickeltischs (11) Längsöffnungen (36) aufweisen, die als Gleitführungen dienen und die es den Befestigungseinrichtungen der einziehbaren Arme (32) ermöglichen, während ihrer Einzugsbewegung, welche die Anordnung ihrer zusätzlichen Platte (34) unter der festen mittleren Platte (24) ermöglicht, geführt zu werden.

5. Wickelmodul nach einem der Ansprüche 1 bis 4, **dadurch gekennzeichnet, dass** der Rahmen (21) des Wickeltischs (11) mit dem durchbrochenen Rahmen fest verbunden ist, und zwar mit Hilfe von Befestigungslaschen in Form von bewegbaren Winkeln (41), die den Tisch (11) nach dem Einziehen auskragend lassen, wobei er durch Befestigungsmittel, die zwischen seinem Rahmen (21) und der anderen Wand des Trägers (5) angeordnet sind, getragen wird.

6. Wickelmodul nach einem der Ansprüche 1 bis 5, **dadurch gekennzeichnet, dass** sich das untere Trum des Endlosbands (25) mit Hilfe zweier zusätzlicher Rollen (27) auf eine Antriebsrolle (26) aufwickelt, wobei die zusätzlichen Rollen (27) unterhalb und auf beiden Seiten der Antriebsrolle (26) angeordnet sind, um ein Aufrollen des Bands (25) auf eine Hälfte der Oberfläche der Antriebsrolle (26) auszuführen, wobei die zusätzlichen Rollen (27) mit dem Rahmen (21) des Tischs (11) fest verbunden sind, und zwar über schnell demontierbare Verbindungseinrichtungen von der Art einfacher Schrauben (44), die mit einer entsprechenden Welle, an der jede zusätzliche Rolle (27) befestigt ist, in direktem Eingriff stehen.

7. Wickelmodul nach Anspruch 2, **dadurch gekennzeichnet, dass** die zusätzlichen Platten (34), die durch die Endarme (32) getragen werden, mit der festen mittleren Platte (24) enden und auf einer Seite zwischen den Armen (32) und den Längsträgern (23) des Rahmens (21) zumindest eine Feineinstellvorrichtung angeordnet ist, wobei es die Einstellvorrichtung ermöglicht, die entsprechende zusätzliche Platte (34) zu verschieben, um ihren Spielraum zu den Stegen (13) des Cyclers (12) und/oder zum Boden oder einem benachbarten Band einzustellen.

8. Fördertisch zur Verwendung in einer Bündelungsanlage, beispielsweise für den Wickelvorgang, wobei der Tisch einen Rahmen (21) aufweist, der an zumindest einem seiner Längsenden mit Tragarmen (32) für eine oder mehrere Führungsrollen (33) eines Endlosförderbands (25) ausgestattet ist, wobei die Tragarme (32) bewegbar und längs einziehbar sind, wobei das Band (25) ein oberes aktives Trum aufweist, das auf einem aus mehreren Teilen ausgeführten Boden gleitet, wovon ein Teil eine feste mittlere Platte (24) umfasst, die durch Längsträger (23) getragen wird, und ein Teil zumindest eine zusätzliche Führungsplatte (34) umfasst, die durch die einziehbaren Arme, welche die Endrolle(n) (33) zur Führung des Bands (25) halten, getragen wird, **dadurch gekennzeichnet, dass** die einziehbaren Arme (32) vertikal bewegbar sind, um ein Einfahren ihrer zusätzlichen. Führungsplatte (34) des Bands (25) zu ermöglichen und die Anordnung der zusätzlichen Platte (34) unter der festen mittleren Platte (24) zu ermöglichen.

9. Fördertisch nach Anspruch 8, **dadurch gekennzeichnet, dass** die Längsträger (23) des Rahmens (21) des Tischs (11) Längsöffnungen (36) aufweisen, die als Gleitführungen dienen und es den Befestigungseinrichtungen der einziehbaren Arme (32) ermöglichen, während ihrer Einzugsbewegung, welche die Anordnung ihrer zusätzlichen Führungsplatte (34) unter der festen mittleren Platte (24) ermöglicht, geführt zu werden.

## Claims

1. Wrapping module comprising, combined in a cradle (5) having a transverse cross-section in the shape of a U, - a wrapping table (11) of which the ends of its structure (21) each comprise one or more rollers (33) for guiding an endless belt (25), and - a cycler (12) having bars (13) mounted on endless chains (14) in order to revolve all around said wrapping table (11), **characterized in that** the structure (21) of said wrapping table (11) consists of laterally arranged side members (23) which are extended by extensions (22) in the form of retractable arms (32) whose ends carry said rollers (33), and said structure (21) is secured, by easily removable means, to at least one of the side walls of said cradle (5), said wall being in the form of a frame (8) pierced with a window (28) opening onto said wrapping table (11), said window (28) having a dimension, in the longitudinal direction, which is less than the total length of said table (11) but which is greater than the length of said table (11) after retraction of its end arms (32).

2. Wrapping module according to claim 1, **characterized in that** the active upper portion of the conveyor belt (25) slides on a bed made of several parts, said bed comprising: - a fixed central plate (24) carried by the side members (23), and - supplemental plates (34) carried by the retractable arms (32) which support the end rollers (33) serving to guide said belt (25).

3. Wrapping module according to claim 2, **characterized in that** the retractable arms (32) which support the end rollers (33) serving to guide the belt (25), can be vertically moved to allow retraction of their supplemental guide plate (34) for said belt (25), and to allow positioning these supplemental plates (34) under the fixed central plate (24).

4. Wrapping module according to claim 3, **characterized in that** the side members (23) of the structure (21) of the wrapping table (11) comprise longitudinal slots (36) which act as rails and which guide the attachment means for the retractable arms (32) during their retraction movement which allows positioning their supplemental plate (34) under the fixed central plate (24).

5. Wrapping module according to any of claims 1 to 4, **characterized in that** the structure (21) of the wrapping table (11) is secured to the windowed frame (8) by means of brackets, in the form of angle brackets (41), which are removable and which, after their removal, leave said table (11) in a cantilevered arrangement, supported by attachment means which are placed between its structure (21) and the other wall of the cradle (5).

6. Wrapping module according to any of claims 1 to 5, **characterized in that** the lower portion of the endless belt (25) is wound around a motorized roller (26) by means of two supplemental rollers (27) arranged above and on each side of said motorized roller (26) in order to wind said belt (25) around half the surface area of said motorized roller (26), said supplemental rollers (27) being secured to the structure (21) of the table (11) by quick-disconnect assembly means of the simple screw type (44), which directly engage with a respective shaft onto which each supplemental roller (27) is mounted.

7. Wrapping module according to claim 2, **characterized in that** the supplemental plates (34) carried by the end arms (32) abut against the fixed central plate (24), and, on one side, at least one fine-tuning adjustment device is placed between said arms (32) and the side members (23) of the structure (21), said adjustment device allowing moving the corresponding supplemental plate (34) forward and back to adjust its gap relative to the bars (13) of the cycler (12) and/or relative to the bed or to an adjacent belt.

8. Conveying table used in a bundling installation for the wrapping operation, for example, said table comprising a structure (21) which is equipped, on at least one of its longitudinal ends, with supporting arms (32) for one or more guide rollers (33) for an endless conveyor belt (25), said supporting arms (32) being movable, longitudinally retractable, said belt (25) comprising an active upper portion which slides on a bed made of several parts, one part comprising a fixed central plate (24) carried by side members (23), and - one part comprising at least one supplemental guide plate (34) which is carried by said retractable arms (32) that support said end roller(s) (33) serving to guide the belt (25), **characterized in that** said retractable arms (32) are vertically movable to allow retraction of their supplemental guide plate (34) for said belt (25) and to allow positioning said supplemental plate (34) under the fixed central plate (24).

9. Conveying table according to claim 8, **characterized in that** the side members (23) of the structure (21) of the table (11) comprise longitudinal slots (36) which act as rails and which guide the attachment means for the retractable arms (32) during their retraction movement which allows positioning their supplemental guide plate under the fixed central plate (24).
